# EUROPEAN PATENT APPLICATION

(11) **EP 2 910 750 A1**
(43) Date of publication of application: **26.08.2015**
(21) Application number: 13847817.7
(22) Date of filing: 26.09.2013
(51) Int. Cl.: F02B 37/013, F02B 37/00, H01M 8/00, H01M 8/04

(54) **INTERNAL COMBUSTION ENGINE**

(30) Priority: 16.10.2012 JP 2012228916
(71) Applicant: TOYOTA JIDOSHA KABUSHIKI KAISHA, Toyota-shi, Aichi-ken, 471-8571 (JP)
(72) Inventor: KITADA, Takayoshi, Toyota-shi, Aichi-ken, 471-8571 (JP)
(74) Representative: Intès, Didier Gérard André
(86) International application number: PCT/JP2013/005743
(87) International publication number: WO 2014/061208

(57) **Abstract**

According to an aspect of the present invention, an internal combustion engine (1) is provided which includes a fuel cell (4), a low-pressure-stage turbocharger (3L) with a low-pressure-stage turbine (3LT) and a low-pressure-stage compressor (3LC), and a high-pressure-stage turbocharger (3H) with a high-pressure-stage turbine (3HT) and a high-pressure-stage compressor (3HC), in which the internal combustion engine (1) is configured such that air to be supplied to the fuel cell (4) is extracted from a downstream side of the low-pressure-stage compressor (3LC), and exhaust gas discharged by the fuel cell (4) is supplied to a position on a downstream side of the high-pressure-stage turbine (3HT) and on an upstream side of the low-pressure-stage turbine (3LT).

## Description

### Technical Field

The present invention relates to an internal combustion engine, and in particular, to an internal combustion engine including a fuel cell and a multistage turbocharger system.

### Background Art

A combination of an internal combustion engine with a fuel cell has been proposed. For example, PTL 1 discloses a hybrid system including an internal combustion engine with a supercharger, and a fuel cell. In the system, when a load on the internal combustion engine increases, anode off gas from the fuel cell is supplied to a turbine housing of the supercharger to suppress a lag in supercharging provided by the supercharger

An internal combustion engine with a multistage turbocharger system is well known. In particular, as the multistage turbocharger system, a two-stage sequential turbo system is well known which includes two turbochargers, a low-pressure-stage turbocharger and a high-pressure-stage turbocharger connected together in series.

When the internal combustion engine with the multistage turbocharger system is combined with a fuel cell, air to be supplied to the fuel cell is desirably obtained from an optimum place, and exhaust gas discharged by the fuel cell is supplied to an optimum place.

In the former case, an air source such as a motor compressor may be separately provided to supply air to the fuel cell. However, separately providing such an air source complicates the apparatus and increases costs and is not preferable.

In the latter case, PTL 1 discloses only a system with one turbocharger. Thus, referring to PTL 1 does not allow identification of the optimum destination of supply of exhaust gas from the fuel cell.

Thus, the present invention has been developed in view of the above-described circumstances. An object of the present invention is to achieve, in an internal combustion engine with a fuel cell and a multistage turbocharger system, at least one of obtainment of air to be supplied to a fuel cell from an optimum place, and supply of exhaust gas discharged by the fuel cell to an optimum place.

### Citation List

### Patent Literature

PTL 1: Japanese Patent Laid-Open No. 2007-016641

### Summary of Invention

An aspect of the present invention provides an internal combustion engine including a fuel cell, a low-pressure-stage turbocharger with a low-pressure-stage turbine and a low-pressure-stage compressor, and a high-pressure-stage turbocharger with a high-pressure-stage turbine and a high-pressure-stage compressor,
in which the internal combustion engine is configured such that air to be supplied to the fuel cell is extracted from a downstream side of the low-pressure-stage compressor, and exhaust gas discharged by the fuel cell is supplied to a position on a downstream side of the high-pressure-stage turbine and on an upstream side of the low-pressure-stage turbine.

In this regard, the "downstream side of the compressor" means the downstream side, in an intake flow direction, of a compressor wheel housed in a compressor housing of the compressor and includes a compressor wheel downstream side portion in the compressor housing. This also applies to the "upstream side of the compressor". Similarly, the "downstream side of the turbine" means the downstream side, in an exhaust flow direction, of a turbine wheel housed in a turbine housing of the turbine and includes a turbine wheel downstream side portion in the turbine housing.

Preferably, the internal combustion engine is configured to extract the air to be supplied to the fuel cell from a position on the downstream side of the low-pressure-stage compressor and on an upstream side of the high-pressure-stage compressor.

Preferably, the internal combustion engine includes a first passage branching from an intake passage located on the downstream side of the low-pressure-stage compressor and connecting to the fuel cell in order to allow extraction of the air to be supplied to the fuel cell, and a second passage extending from the fuel cell and joining an exhaust passage located on the downstream side of the high-pressure-stage turbine and the upstream side of the low-pressure-stage turbine in order to allow supply of exhaust gas discharged by the fuel cell.

Preferably, the internal combustion engine includes a first control valve provided in the first passage and a second control valve provided in the second passage.

Preferably, the internal combustion engine includes power generation control means for controlling execution and stoppage of power generation by the fuel cell.

Preferably, the power generation control means stops power generation performed by the fuel cell when an acceleration request is made to the internal combustion engine.

Preferably, the power generation control means stops power generation performed by the fuel cell when a pressure of a destination of supply of the exhaust gas from the fuel cell is equal to or higher than a predetermined pressure.

The present invention exerts an excellent effect that can achieve, in an internal combustion engine with a fuel cell and a multistage turbocharger system, at least one of obtainment of air to be supplied to a fuel cell from an optimum place, and supply of exhaust gas discharged by the fuel cell to an optimum place.

### Brief Description of Drawings

[Fig. 1] Fig. 1 is a schematic diagram depicting a configuration of an embodiment of the present invention;
[Fig. 2] Fig. 2 is a schematic diagram depicting a configuration according to a comparative example;
[Fig. 3] Fig. 3 is a diagram depicting a map of an engine operating region;
[Fig. 4] Fig. 4 is a table depicting the operating statuses of valves; and
[Fig. 5] Fig. 5 is a flowchart illustrating the contents of power generation control.

### Description of Embodiments

An embodiment of the present invention will be described below in detail with reference to the attached drawings.

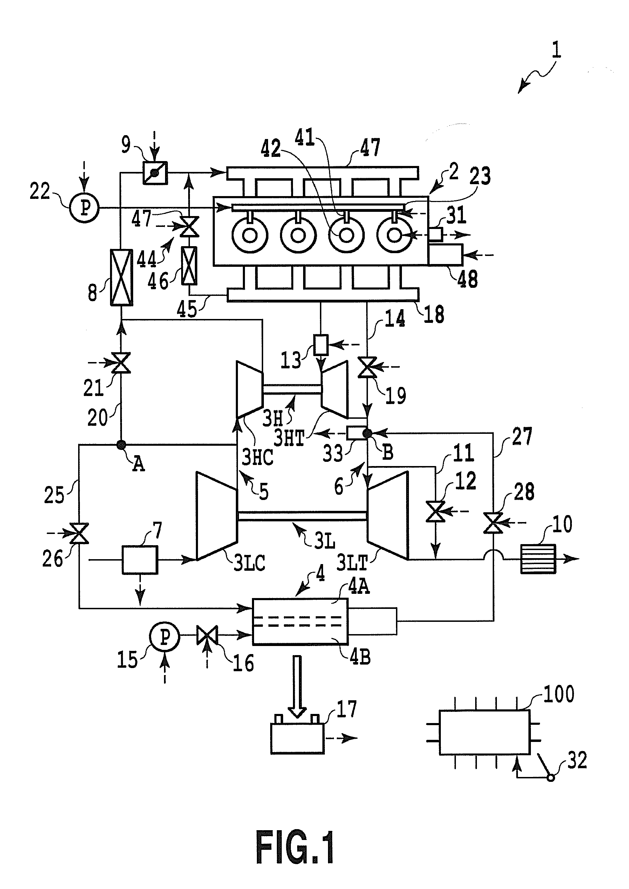

As depicted in Fig. 1, an internal combustion engine (engine) 1 includes an engine main body 2, a plurality of (two) turbochargers, that is, a low-pressure-stage turbocharger 3L and a high-pressure-stage turbocharger 3H, and a fuel cell 4. The engine 1 may be either of two types of engines, that is, a spark ignition internal combustion engine (gasoline engine) or a compression ignition internal combustion engine (diesel engine) and is a spark ignition internal combustion engine according to the present embodiment. The engine 1 is mounted in a vehicle (automobile) not depicted in the drawings.

The low-pressure-stage turbocharger is hereinafter also referred to as the "LP turbo", and the high-pressure-stage turbocharger is hereinafter also referred to as the "HP turbo". The low pressure stage is hereinafter also referred to as the "LP", the high pressure stage is hereinafter also referred to as the "HP", and the fuel cell is hereinafter also referred to as the "FC".

The engine main body 2 includes basic engine components such as a cylinder block, a cylinder head, a crank case, an oil pan, a head cover, a piston, a conrod, a crank shaft, a cam shaft, an intake valve, and an exhaust valve. Furthermore, the engine main body 2 includes a plurality of (four) cylinders each provided with a fuel injection injector 41 and a spark plug 42.

An intake passage 5 and an exhaust passage 6 are connected to the engine main body 2. The low-pressure-stage turbocharger 3L and the high-pressure-stage turbocharger 3H are provided in series so as to stride over the intake passage 5 and the exhaust passage 6. The high-pressure-stage turbocharger 3H is provided closer to the engine main body 2, whereas the low-pressure-stage turbocharger 3L is provided farther from the engine main body 2.

The low-pressure-stage turbocharger 3L and the high-pressure-stage turbocharger 3H provide a multistage turbocharger system, particularly a second-stage sequential turbo system. A high-pressure-stage turbine 3HT of the high-pressure-stage turbocharger 3H is disposed on an upstream side in the exhaust passage 6. A low-pressure-stage turbine 3LT of the low-pressure-stage turbocharger 3L is disposed on a downstream side in the exhaust passage 6. Furthermore, a low-pressure-stage compressor 3LC of the low-pressure-stage turbocharger 3L is disposed on an upstream side of the intake passage 5. A high-pressure-stage compressor 3LC of the high-pressure-stage turbocharger 3H is disposed on a downstream side of the intake passage 5.

The low-pressure-stage turbine is hereinafter also referred to as the "LP turbine", and the high-pressure-stage turbine is hereinafter also referred to as the "HP turbine". The low-pressure-stage compressor is hereinafter also referred to as the "LP compressor", and the high-pressure-stage compressor is hereinafter also referred to as the "HP compressor". Furthermore, the "upstream side" and the "downstream side" refer to the upstream side and the downstream side in an intake flow direction or an exhaust flow direction as depicted by arrows in the figures.

In the intake passage 5, an air flow meter 7 is provided on an upstream side of the low-pressure-stage compressor 3LC to detect the amount of intake air. An intercooler 8 and an electronic control throttle valve 9 are provided in series on a downstream side of the high-pressure-stage compressor 3HC. An air cleaner (not depicted in the drawings) is provided at an upstream end of the intake passage 5.

In the exhaust passage 6, an exhaust purification catalyst 10 is provided on a downstream side of the low-pressure-stage turbine 3LT. Only one exhaust purification catalyst 10 is depicted in Fig. 1, but a plurality of exhaust purification catalyst 10 may be provided. In the present embodiment, the exhaust purification catalyst 10 includes a three-way catalyst. However, the type of the exhaust purification catalyst 10 is optional.

Furthermore, an LP turbine bypass passage 11 that bypasses the low-pressure-stage turbine 3LT is installed in parallel with the exhaust passage 6. The LP turbine bypass passage 11 branches from the exhaust passage 6 on a downstream side of the high-pressure-stage turbine 3HT and an upstream side of the low-pressure-stage turbine 3LT and joins the exhaust passage 6 on the downstream side of the low-pressure-stage turbine 3LT and on an upstream side of the exhaust purification catalyst 10. The LP turbine bypass passage 11 is provided with a waste gate valve 12.

A variable vane or a variable nozzle (VN) 13 is provided at an inlet portion of the high-pressure-stage turbine 3HT on the exhaust passage 6. An HP turbine bypass passage 14 that bypasses the high-pressure-stage turbine 3HT is provided in parallel with the exhaust passage 6. The HP turbine bypass passage 14 branches from the exhaust passage 6 at the position of an exhaust manifold 18 located on an upstream side of the variable nozzle 13 and joins the exhaust passage 6 on the downstream side of the high-pressure-stage turbine 3HT and on an upstream side of the branch position on the LP turbine bypass passage 11. An HP turbine bypass valve 19 is provided in the HP turbine bypass passage 14.

An HP compressor bypass passage 20 that bypasses the high-pressure-stage compressor 3HC is provided in parallel with the intake passage 5. The HP compressor bypass passage 20 branches from the intake passage 5 on a downstream side of the low-pressure-stage compressor 3LC and on an upstream side of the high-pressure-stage compressor 3HC and joins the intake passage 5 on the downstream side of the high-pressure-stage compressor 3HC and on an upstream side of the intercooler 8. An HP compressor bypass valve 21 is provided in the HP compressor bypass passage 20.

An EGR apparatus 44 is provided to return a portion of exhaust gas from the engine main body 2 (hereinafter referred to as engine exhaust). The EGR apparatus 44 includes an EGR passage 45, an EGR cooler 46, and an EGR valve 47. The EGR passage 45 extends from the exhaust manifold 18, forming the most upstream portion of the exhaust passage 6, to an intake manifold 47, forming the most downstream portion of the intake passage 6. The EGR cooler 46 and the EGR valve 47 are provided in the EGR passage 45 in this order from the upstream side.

An electric fuel pump 22 is provided to supply fuel to the injectors 41 of the cylinders in the engine main body 2. The fuel pump 22 delivers fuel to a delivery pipe 23, and fuel stored in the delivery pipe 23 under pressure is injected directly into each cylinder through the corresponding injector 41. Thus, the engine according to the present embodiment is of a direct injection type. However, an injection type is not particularly limited and a port injection type may be used.

Furthermore, an electric FC fuel pump 15 is provided to supply fuel to the fuel cell 4. An FC fuel metering valve 16 is provided between the FC fuel pump 15 and the fuel cell 4 to adjust the amount of fuel supplied to the fuel cell 4. Thus, in the present embodiment, the fuel pumps are provided individually for the injectors and for the fuel cell, but the fuel pump may be shared by the injectors and the fuel cell.

Moreover, the internal combustion engine is provided with a battery 17 that supplies power to electric components of the vehicle and an electric motor that cranks the engine main body 2 in order to activate or start the engine main body 2, that is, a stator motor 48. The type of the battery 17 is optional, and a general lead-acid battery is used according to the present embodiment. The stator motor 48 appropriately rotationally drives a crank shaft of the engine main body 2.

An air supply path 25 is provided to supply air to the fuel cell 4. The air supply passage 25 branches from an HP compressor bypass passage 20 located on an upstream side of the HP compressor bypass valve 21 and connects to the fuel cell 4. A branch position on the air supply path 25 is depicted by reference character A. As a result, air to be supplied to the fuel cell 4 (hereinafter also referred to as FC air) is extracted from a part of the intake passage 5 located on the downstream side of the low-pressure-stage compressor 3LC, particularly a part of the intake passage 5 located on the downstream side of the low-pressure-stage compressor 3LC and on the upstream side of the high-pressure-stage compressor 3HC. A part of the HP compressor bypass passage 20 extending from a branch position from which the intake passage 5 branches (the start position of the intake passage 5) to the branch position A on the air supply path 25, and the air supply path 25, form a first passage through which air is supplied to the fuel cell 4.

The air supply path 25 is provided with an air supply control valve 26 serving as a first control valve. The air supply control valve 26 is a valve that adjusts the amount of air supplied to the fuel cell 4. In the present embodiment, the air supply control valve 26 includes a single two-way valve and is provided in the middle of the air supply path 25. However, the type and installation position of the air supply control valve 26 are optional provided that the amount of air supplied to the fuel cell 4 can be adjusted.

An exhaust path 27 is provided to discharge exhaust gas from the fuel cell 4 (hereinafter referred to as FC exhaust gas). The exhaust path 27 extends from the fuel cell 4 and joins a part of the exhaust passage 6 located on the downstream side of the high-pressure-stage turbine 3HT and on the upstream side of the low-pressure-stage turbine 3LT. More specifically, the exhaust path 27 joins a part of the exhaust passage 6 located on a downstream side of a junction position on the HP turbine bypass passage 14 and on an upstream side of a branch position on the LP turbine bypass passage 11. A junction position on the exhaust path 27 is denoted by reference character B. Thus, exhaust gas discharged by the fuel cell 4 is supplied or discharged to a part of the exhaust passage 6 located on the downstream side of the high-pressure-stage turbine 3HT and on the upstream side of the low-pressure-stage turbine 3LT. The exhaust path 27 forms a second passage through which the FC exhaust gas is supplied.

The exhaust path 27 is adapted to join exhaust gas from an air electrode (cathode) 4A of the fuel cell 4 and exhaust gas from a fuel electrode (anode) 4B of the fuel cell 4 together to supply the resultant exhaust gas to the exhaust passage 6.

An exhaust control valve 28 serving as a second control valve is provided in the exhaust path 27. The exhaust control valve 28 is a valve used to adjust the amount of FC exhaust gas supplied to the exhaust passage 6. In the present embodiment, the exhaust control valve 28 includes a two-way valve and is provided in the middle of the exhaust path 27. However, the type and installation position of the exhaust control valve 28 are optional provided that the amount of FC exhaust gas discharged to the exhaust passage 6 can be adjusted.

An electronic control unit (ECU) 100 as a control apparatus or a control unit is provided to control the engine 1 and the vehicle. The ECU 100 includes a CPU, a storage apparatus such as ROM and RAM, an A/D converter, and an I/O interface. The storage apparatus stores various programs, data, maps, and the like. The ECU 100 executes the programs and the like to perform various types of control.

The ECU 100 receives various signals from, in addition to the above-described air flow meter 7, a crank angle sensor 31, an accelerator opening degree sensor 32, a pressure sensor 33, and various other sensors and switches. Furthermore, the ECU 100 outputs control signals to the above-described injectors 41, spark plug 42, throttle valve 9, waste gate valve 12, variable nozzle 13, EGR valve 47, stator motor 48, fuel pump 22, HP turbine bypass valve 19, HP compressor bypass valve 21, FC fuel pump 15, FC fuel metering valve 16, air supply control valve 26, and exhaust control valve 28, to control these components.

The ECU 100 detects the amount of sucked air that is the amount of air sucked per unit time, that is, an intake flow rate, based on a signal from the air flow meter 7. Then, the ECU 100 detects a load on the engine 1 based on at least one of an accelerator opening detected by the accelerator opening degree sensor 32 and the amount of sucked air detected by the air flow meter 7.

The ECU 100 detects a crank angle itself and the engine speed of the engine 1, based on a crank pulse signal from the crank angle sensor 31. The term "engine speed" refers to the number of rotations per unit time and is synonymous with a rotation speed. In the present embodiment, the engine speed refers to the number of rotations per minute rpm.

Now, the fuel cell 4 will be described in detail. As is known, the fuel cell 4 generates power as a result of electrochemical reaction between air and fuel (hydrogen). The fuel cell 4 according to the present embodiment is in a solid oxide form or a solid electrolyte form (SOFC). However, another type of fuel cell, for example, a solid polymer form (PEFC), a phosphoric acid form (PAFC), or a dissolved carbonate form (MCFC) is also available.

The fuel cell 4 mainly includes a cell stack with a plurality of cells stacked with separators each sandwiched between the cells, each of the cells including an air electrode 4A, a fuel electrode 4B, and an electrolyte sandwiched between the electrodes. The air electrode 4A is supplied substantially with oxygen O₂ contained in the air delivered through the intake passage 5. The fuel electrode 4B is supplied substantially with hydrogen H₂ resulting from reformation of liquid fuel (in the present embodiment, gasoline). The fuel electrode may be supplied with carbon monoxide, and in this case, carbon dioxide CO₂ is discharged after the reaction. A main component of exhaust gas from the fuel cell 4 is water vapor.

Compared to the use of other types of fuel cells, the use of SOFC has the following advantages.
(1) The SOFC has a relatively high operating temperature of between 450 and 1,000°C, which is close to an engine exhaust temperature. This allows high-temperature FC exhaust gas to be utilized to drive the turbine.
(2) The high operating temperature allows the fuel to be reformed inside the SOFC, enabling a reformer to be omitted and allowing direct supply of liquid fuel.
(3) The SOFC has relatively high power generation efficiency (45 to 65%) and is compact.

In the present embodiment, the fuel cell 4 functions as a power generation apparatus that allows the battery 17, serving as a main power supply, to be charged, or an auxiliary power supply that assists the main power supply. Hence, unlike a general engine, the engine 1 according to the present embodiment includes no power generator driven by a crank shaft, that is, an alternator. Instead of the alternator, the fuel cell 4 is provided. Such omission of a mechanism power generator enables a mechanical loss to be reduced to improve fuel efficiency. Of course, the following embodiments are also possible: an embodiment in which the fuel cell 4 is used with a mechanical power generator or an embodiment in which the fuel cell 4 is used for another application, for example, to provide mechanical power.

Now, a multistage turbocharger system will be described. The high-pressure-stage turbocharger 3H is smaller, in size or diameter, than the low-pressure-stage turbocharger 3L. A low speed region of the engine is mainly covered by the high-pressure-stage turbocharger 3H. A high speed region of the engine is mainly covered by the low-pressure-stage turbocharger 3L. When the engine speed increases from the idling speed, first, the small high-pressure-stage turbocharger 3H starts rotating and performs supercharging. Thus, a high engine torque can be generated even in the low speed region. Furthermore, the high-pressure-stage turbocharger 3H provides a better supercharging response than the low-pressure-stage turbocharger 3L to enable turbo lag to be suppressed in an emission mode region and a regular use region.

The emission mode region refers to an engine operating region used when the vehicle is operated in accordance with an emission mode (JC08 or the like) specified under a country-specific law. Furthermore, the regular use region refers to an engine operating region used for normal operation of the vehicle. Both regions are regions from a low engine speed and a low engine load to a medium engine speed and a medium engine load in which mainly the high-pressure-stage turbocharger 3H works.

Subsequently, when the engine speed of the engine further increases, the large low-pressure-stage turbocharger 3L relatively starts rotating and performs supercharging. Thus, a high engine torque can be generated in the high speed region. The low-pressure-stage turbocharger 3L is large and can thus receive a large amount of exhaust gas from the high speed region.

To allow such an operation to be achieved, the HP turbine bypass valve 19 and the HP compressor bypass valve 21 are generally controlled as described below by the ECU 100. When the engine speed increases from the number of idling speed, the HP turbine bypass valve 19 and the HP compressor bypass valve 21 are first controlled to be fully closed. Then, all the amount of engine exhaust gas is supplied to the HP turbine 3HT without bypassing the HP turbine 3HT. Thus, the HP turbine 3HT and thus the HP compressor 3HC start rotating, allowing the HP turbo 3H to perform supercharging.

At this time, exhaust gas having passed through the HP turbine 3HT is supplied to the LP turbine 3LT. However, much of the exhaust gas energy (pressure energy and heat energy) has been consumed, and thus, the LP turbine 3LT is driven only at a low level. The amount of work of the LP compressor 3LC is inevitably small. Sucked air with the pressure thereof slightly raised by the LP compressor 3LC is fully supercharged by the HP compressor 3HC.

Subsequently, as the engine speed increases, the HP turbine bypass valve 19 and the HP compressor bypass valve 21 are gradually opened. Then, the amount of engine exhaust gas bypassing the HP turbine 3HT increases. Thus, the amount of work of the HP turbine 3HT decreases, while simultaneously the amount of work of the LP turbine 3LT increases. In connection with this, the amount of work of the HP compressor 3HC decreases, while simultaneously the amount of work of the LP compressor 3LC increases.

Subsequently, as the engine speed further increases, the HP turbine bypass valve 19 and the HP compressor bypass valve 21 are controlled to be fully opened. Then, approximately all the amount of engine exhaust gas bypasses the HP turbine 3HT and is supplied to the LP turbine 3LT. An inlet pressure of the HP turbine 3HT is approximately equal to an outlet pressure of the HP turbine 3HT. Thus, the HP turbine 3HT does not substantially work.

In connection with this, the LP compressor 3LC starts full supercharging. Approximately all the amount of air discharged by the LP compressor 3LC bypasses the HP compressor 3HC and is guided to the engine main body side. At this time, the HP compressor 3HC does not substantially work.

As is the case with a normal single turbo that is not of a multistage type, when a supercharging pressure reaches a predetermined upper limit pressure, the waste gate valve 12 is opened and supercharging pressure limit control is performed. Furthermore, the opening degree of the variable nozzle 13 is controlled depending on the engine operating status to control the inlet pressure of the HP turbine 3HT. The pressure in the exhaust manifold 18 is raised when EGR is performed, and thus, the opening degree of the variable nozzle 13 may be reduced.

The engine 1 according to the present embodiment including the multistage turbocharger system (3L and 3H) and the fuel cell 4 is configured to extract the air to be supplied to the fuel cell 4, from the downstream side of the LP compressor 3LC. That is, the LP compressor 3LC is shared with the engine main body 2 as an air source for the fuel cell 4 so that a portion of the intake air with the pressure thereof raised by the LP compressor 3LC is extracted and supplied to the fuel cell 4. This eliminates the need to separately provide an air source such as a motor compressor which allows air to be supplied to the fuel cell. Thus, complication of the apparatus and a cost increase can be avoided.

Furthermore, the engine 1 according to the present embodiment is configured to supply exhaust gas discharged by the fuel cell 4 to a position on the downstream side of the HP turbine 3HT and on the upstream side of the LP turbine 3LT. Such specification of the destination of supply of the FC exhaust gas enables the FC exhaust gas to be supplied or discharged to a place with a relatively low engine exhaust pressure, allowing the FC exhaust gas to be smoothly discharged. This enables an increase in the efficiency of discharge of the FC exhaust gas and thus in the power generation efficiency of the fuel cell 4.

Furthermore, the FC exhaust gas can be utilized to drive the LP turbine 3LT to increase the engine speed of the LP turbo 3L. In other words, the FC exhaust gas can be used to assist rotation of the LP turbo 3L. Thus, the amount of air discharged by the LP compressor 3LC can be increased, and the resultant discharged air can be supplied to the HP compressor 3HC (only when the HP compressor bypass valve 21 is closed). This mainly allows improvement of start of rotation of the HP compressor 3HC during acceleration and thus of start of an increase in supercharging pressure provided by the HP turbo 3H, and suppression of turbo lag. In particular, at the time of zero start acceleration, the acceleration starts in a state where only a small amount of exhaust gas is discharged by the engine. Thus, improving the start of an increase in supercharging pressure provided by the HP turbo 3H is very effective for enhancing zero start acceleration performance.

On the other hand, the amount of air discharged by the LP compressor 3LC increases to enable a corresponding increase in the amount of air supplied to the fuel cell 4. This is also advantageous for improving power generation efficiency.

Moreover, the FC exhaust gas is discharged to the downstream side of the HP turbine 3HT. This enables suppression of a change in the pressure on the upstream side of the HP turbine caused by discharge of the FC exhaust gas to the upstream side of the HP turbine, thus restraining degrading of the accuracy of EGR control and deterioration of emission.

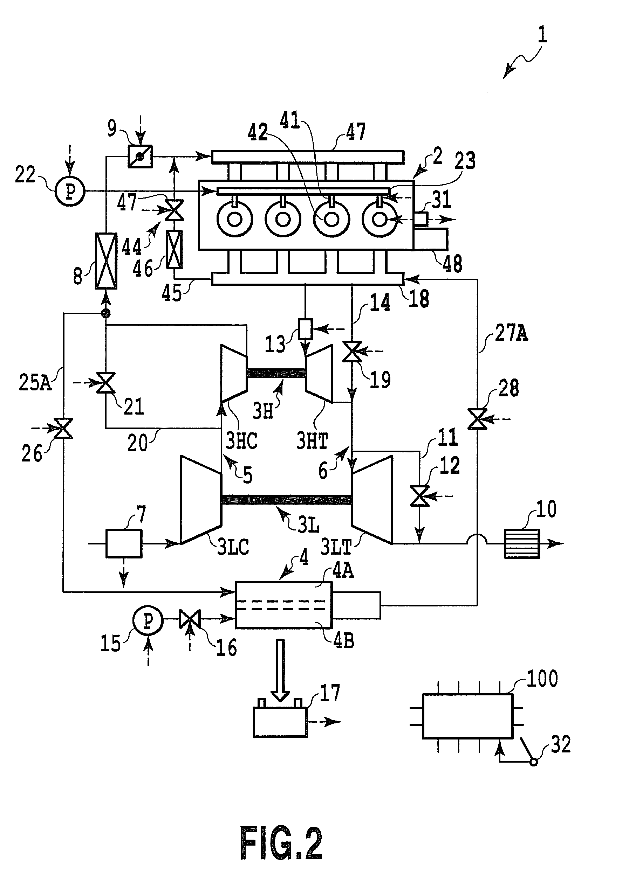

Advantages of the present embodiment will be described in detail in comparison with a comparative example depicted in Fig. 2. A configuration in the comparative example depicted in Fig. 2 is different from the configuration of the present embodiment depicted in Fig. 1 in the following points.

The comparative example is configured such that the FC exhaust gas is supplied to the upstream side of the high-pressure-stage turbine 3HT. That is, an exhaust path 27A extending from the fuel cell 4 is connected to the exhaust manifold 18 located on the upstream side of the high-pressure-stage turbine 3HT. The exhaust path 27A is provided with the exhaust control valve 28 as is the case with the present embodiment. The pressure sensor 33 is omitted.

Furthermore, the comparative example is configured such that the air to be supplied to the fuel cell 4 is extracted from the downstream side of the HP compressor 3HC. That is, an air supply path 25A through which air is supplied to the fuel cell 4 branches from the intake passage 5 located on the downstream side of the HP compressor 3HC.

First, the exhaust side will be noted. In the comparative example, the FC exhaust gas is supplied or discharged to a place (the inside of the exhaust manifold 18) where engine exhaust pressure is higher than in the present embodiment (only when the HP turbine bypass valve 19 is closed). Then, smoothly discharging the FC exhaust gas may fail, resulting in a decrease in the efficiency of discharge of the FC exhaust gas and thus in the power generation efficiency of the fuel cell 4. Particularly in an emission mode region, EGR is positively performed, leading to a tendency to reduce the opening degree of the variable nozzle and to raise the internal pressure of the exhaust manifold. Hence, this is also the cause of the failure to smoothly discharge the FC exhaust gas.

Furthermore, the supply of the FC exhaust gas to the inside of the exhaust manifold 18 changes the internal pressure of the exhaust manifold. In particular, the flow rate of the FC exhaust gas is likely to be unstable before warm-up of the fuel cell 4 is complete. Then, in connection with this, the internal pressure of the exhaust manifold becomes unstable to reduce the accuracy of EGR control, possibly affecting the emission. Power generation performed by the fuel cell 4 may remain stopped until the warm-up of the fuel cell 4 is completed. However, this prevents power generation from being performed in a cold district, possibly affecting charging of the battery.

On the other hand, in the present embodiment, the FC exhaust gas is discharged to the position on the downstream side of the HP turbine 3HT and on the upstream side of the LP turbine 3LT as depicted in Fig. 1. Thus, the problem with the comparative example can be solved. That is, the FC exhaust gas is discharged to the place where the engine exhaust pressure is lower than in the exhaust manifold 18. Hence, the efficiency of discharge of the FC exhaust gas and the power generation efficiency of the fuel cell 4 can be made higher than in the comparative example. Furthermore, even when the internal pressure of the exhaust manifold increases with decreasing opening degree of the variable nozzle caused by the execution of EGR and the like, the FC exhaust gas is discharged to the place substantially unrelated to the increased internal pressure of the exhaust manifold. Consequently, the FC exhaust gas can be smoothly discharged.

Furthermore, the FC exhaust gas is discharged to the position that does not affect the internal pressure of the exhaust manifold. Thus, a reduced accuracy of EGR control and thus an adverse effect on the emission can be avoided. Then, power generation can be performed even before the warm-up of the fuel cell 4 is complete.

Thus, the present embodiment enables the exhaust gas discharged by the fuel cell 4 to be supplied or discharged to the optimum place.

For the HP turbo 3H according to the present embodiment, a bypass passage and a waste gate valve may be provided instead of the variable nozzle 13. However, the use of the variable nozzle 13 advantageously enlarges the operating region of the HP turbo 3H to allow the size of the LP turbo 3L to be increased, providing increased outputs. Similarly, for the LP turbo 3L, a variable nozzle may be provided instead of the bypass passage 11 and the waste gate valve 12.

Now, the intake side will be noted. Also in the comparative example depicted in Fig. 2, the air to be supplied to the fuel cell 4, that is, the FC air, is extracted from the downstream side of the LP compressor 3LC, particularly from the downstream side of the HP compressor 3HC. Hence, the above-described advantages similar to those of the present embodiment are obtained by utilizing both compressors, particularly the HP compressor 3HC, as an air source for the fuel cell 4.

However, extraction of The FC air from the downstream side of the HP compressor 3HC poses the following problem. Here, description assumes that the configuration in the comparative example is adopted for the intake side, whereas the configuration according to the present embodiment is adopted for the exhaust side.

In general, in a turbocharger, air fed from the compressor is used for combustion in a combustion chamber to become exhaust gas, which drives the turbine to establish energy balance.

However, when The FC air is extracted from the downstream side of the HP compressor 3HC, the amount of work of the HP turbo 3H increases to prevent the energy balance in the HP turbine 3HT from being established.

As described above, when the FC exhaust gas is supplied to the position on the downstream side of the HP turbine 3HT and on the upstream side of the LP turbine 3LT, the numbers of rotations of the LP turbine 3LT and the LP compressor 3LC increase. Then, the amount of air discharged by the LP compressor 3LC increases, and the engine speed of the HP compressor 3HC needs to be increased by a value equivalent to the increased amount. This is because the HP compressor 3HC otherwise fails to appropriately suck the increased amount of air.

However, the air discharged by the HP compressor 3HC is partly retrieved as the FC air. This prevents the increased amount of air from being supplied to the combustion chamber to preclude an amount of exhaust gas equivalent to the increased amount from being supplied to the HP turbine 3HT. Thus, the numbers of rotations of the HP turbine 3HT and thus of the HP compressor 3HC are prevented from being increased by the value equivalent to the increased amount. Hence, the energy balance in the HP turbo 3H fails to be established.

In this case, the opening degree of the variable nozzle 13 may be reduced in order to increase the number of rotations of the HP turbine 3HT by the value equivalent to the increased amount. However, the reduced opening degree of the variable nozzle 13 increases the internal pressure of the exhaust manifold, that is, the back pressure of the engine main body 2, degrading fuel consumption. This is a first problem.

A second problem is that, since the HP turbo 3H has a smaller size (smaller diameter) than the LP turbo 3L, it is possible that the HP compressor 3HC is not able to suck all of the increased amount of air discharged by the LP compressor 3LC.

The present embodiment can solve these problems. That is, the present embodiment allows the FC air to be extracted from a position on the downstream side of the LP compressor 3LC and on the upstream side of the HP compressor 3HC. Thus, in connection with the energy balance in the turbo, the increased amount of air discharged by the LP compressor 3LC can be immediately retrieved before being fed to the HP compressor 3HC. In other words, energy transmission can be performed in a loop of the fuel cell 4→the FC exhaust gas→the LP turbine 3LT→the LP compressor 3LC→the FC exhaust gas→the fuel cell 4. In this regard, the energy balance in the LP turbo 3L can be established. The rate of a portion of the increased amount of air discharged by the LP compressor which portion is supplied to the HP compressor 3HC is expected to be substantially negligible. Hence, the energy balance in the HP turbo 3H can also be established. Control for reduction of the opening degree of the variable nozzle as described above is also not needed, and thus, degraded fuel consumption can be suppressed.

On the other hand, the amount of air supplied to the HP compressor 3HC is not substantially increased, and thus, the HP compressor 3HC can suck all of the amount of air supplied. In this regard, if the HP compressor 3HC is not able to suck all of the increased amount of air in the above-described example (where the intake side is configured as depicted in Fig. 2 and the exhaust side is configured as depicted in Fig. 1), the HP compressor bypass valve 21 may be opened. However, this is synonymous with retrieval of the FC air from the position on the downstream side of the LP compressor 3LC and on the upstream side of the HP compressor 3HC.

Thus, according to the present embodiment, the air to be supplied to the fuel cell can be obtained from the optimum place.

Now, the control according to the present embodiment will be described.

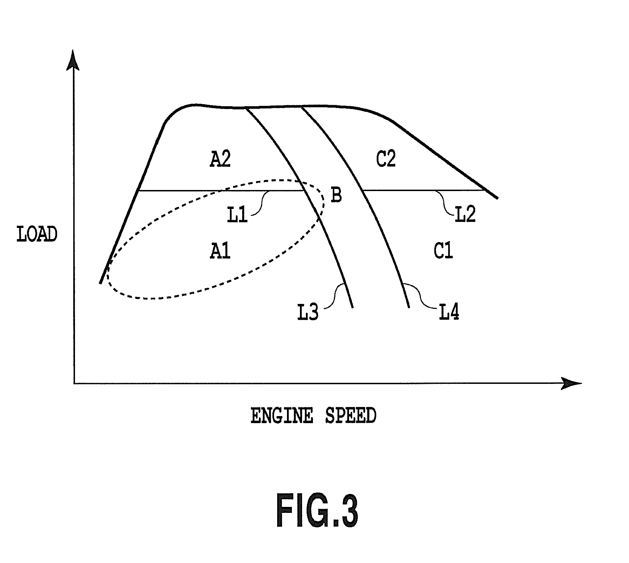

Fig. 3 depicts a map of an engine operating region defined by the engine speed and the load on the engine. The map is pre-created based on results of tests and prestored in the ECU 100. In the map, a typical emission mode region is depicted by a dashed line for reference.

As depicted in Fig. 3, the entire operating region of the engine is divided into a plurality of regions. A region A1 is a region corresponding to low speed and low load. A region A2 is a region corresponding to low speed and high load. A region C1 is a region corresponding to high speed and low load. A region C2 is a region corresponding to high speed and high load. A region B is an intermediate region or a transition area between the regions A1, A2 and the regions C1, C2. The region A1 and the region A2 are separated from each other by a predetermined boundary line L1. The region C1 and the region C2 are separated from each other by a predetermined boundary line L2. The regions A1, A2 are separated from the region B by a predetermined boundary line L3. The regions C1, C2 are separated from the region B by a predetermined boundary line L4.

In the present embodiment, the boundary line L1 corresponds to a predetermined and constant first load KL1. The boundary line L2 corresponds to a predetermined and constant second load KL2. The first load KL1 and the second load KL2 are equal but may be different from each other. Furthermore, the first load KL1 and the second load KL2 need not necessarily be constant but may vary in accordance with the engine speed.

The region B separates the regions A1, A2 from the regions C1, C2 at a region with the engine speed that is half the maximum engine speed. The boundary lines L3, L4 are substantially parallel to each other and exhibit a characteristic in which the load decreases rapidly with increasing engine speed.

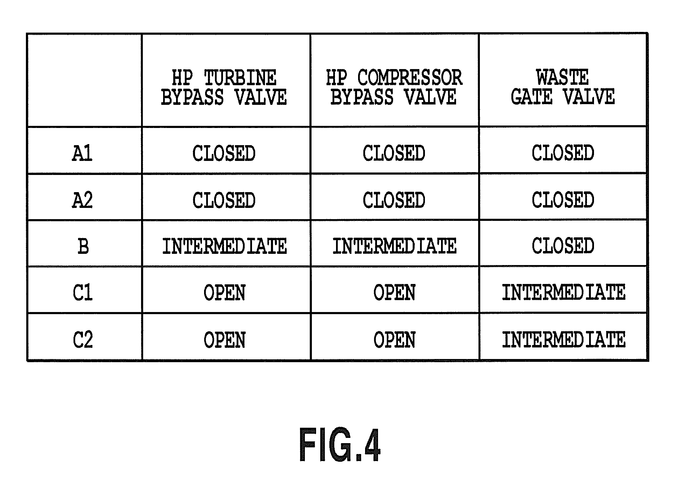

The ECU 100 compares the detected actual engine speed and a detected actual load with the map to control the HP turbine bypass valve 19, the HP compressor bypass valve 21, and the waste gate valve 12 for each region as depicted in Fig. 4. In the figure, "closed" means a state where the valve is substantially fully closed, "open" means a state where the valve is substantially fully open, and "intermediate" means a state where the valve is positioned at an intermediate opening degree between the fully closed state and the fully open state and where the opening degree is controlled by the ECU 100.

When the detected actual engine speed and the detected actual load belong to the region A1, that is, when the engine speed is equal to or smaller than a predetermined first engine speed N1 on the boundary line L3 and the load is equal to or lower than a first load KL1 on the boundary line L1, the HP turbine bypass valve 19, the HP compressor bypass valve 21, and the waste gate valve 12 are all controlled to be fully closed. Thus, the engine exhaust gas is supplied to the HP turbine 3HT without bypassing the HP turbine 3HT. The air from the LP compressor 3LC is supplied to the HP compressor 3HC without bypassing the HP compressor 3HC. Consequently, supercharging is performed by the HP turbo 3H.

When the detected actual engine speed and the detected actual load belong to the region A2, that is, when the engine speed is equal to or smaller than the first engine speed N1 on the boundary line L3 and the load is higher than the first load KL1 on the boundary line L1, the HP turbine bypass valve 19, the HP compressor bypass valve 21, and the waste gate valve 12 are all controlled to be fully closed as in the case of the region A1.

When the detected actual engine speed and the detected actual load belong to the region B, that is, when the engine speed is larger than the first engine speed N1 on the boundary line L3 and equal to or smaller than a second engine speed N2 on the boundary line L4, where the engine speed varies in accordance with the load, the HP turbine bypass valve 19 and the HP compressor bypass valve 21 are controlled to the intermediate opening degree, and the waste gate valve 12 is controlled to be fully closed. At this time, in order to allow supercharging work to be smoothly shifted from the HP turbo 3H to the LP turbo 3L, the HP turbine bypass valve 19 and the HP compressor bypass valve 21 are gradually opened as the engine speed increases.

When the detected actual engine speed and the detected actual load belong to the region C1, that is, when the engine speed is larger than the second engine speed N2 on the boundary line L4 and the load is equal to or lower than a second load KL2 on the boundary line L2, the HP turbine bypass valve 19 and the HP compressor bypass valve 21 are controlled to be fully opened, and the waste gate valve 12 is controlled to the intermediate opening degree. Thus, the engine exhaust gas bypasses the HP turbine 3HT and is supplied to the LP turbine 3LT. The air from the LP compressor 3LC bypasses the HP compressor 3HC and is supplied to the engine main body 2. Consequently, supercharging is performed by the LP turbo 3L.

When the detected actual engine speed and the detected actual load belong to the region C2, that is, when the engine speed is larger than the second engine speed N2 on the boundary line L4 and the load is higher than the second load KL2 on the boundary line L2, the HP turbine bypass valve 19 and the HP compressor bypass valve 21 are controlled to be fully opened, and the waste gate valve 12 is controlled to the intermediate opening degree. Thus, supercharging is performed by the LP turbo 3L.

When a driver steps on an accelerator pedal, an acceleration request may be made to the engine. If a portion of the air from the LP compressor 3LC is supplied to the fuel cell 4 when the acceleration request is generated, not all of the air is fed into the combustion chamber, and the engine and the acceleration of the vehicle are affected. Thus, in the present embodiment, when the acceleration request is generated, the supply of air and fuel to the fuel cell 4 is discontinued to stop power generation performed by the fuel cell 4. This allows all of the air from the LP compressor 3LC to be fed to the combustion chamber to achieve a desired speed.

More specifically, the ECU 100 determines that the acceleration request is generated when an accelerator opening degree Ac detected by the accelerator opening degree sensor 32 is equal to or higher than a predetermined opening degree. The predetermined opening degree may be optionally set but is, for practical reasons, set close to an opening degree close to the fully open state (full acceleration), for example, to 70%, according to the embodiment. In this case, 0% corresponds to the fully closed state, and 100% corresponds to the fully open state. Such an acceleration state relatively infrequently occurs. Thus, even when power generation is stopped if a power generation request has been generated, no problem occurs in a practical sense. Determination of whether or not an acceleration request has been made may be performed by any other method including a well-known method, for example, based on the engine load.

Then, upon determining that an acceleration request has been generated, the ECU 100 controls the air supply control valve 26 and the exhaust control valve 28 so that the valves 26 and 28 are fully closed. Furthermore, the FC fuel pump 15 is stopped. Thus, power generation preformed by the fuel cell 4 is stopped. Instead of or in addition to stopping the FC fuel pump 15, it is preferable to control the FC fuel metering valve 16 so that the valve 16 is fully closed.

On the other hand, when the pressure on the position on the downstream side of the HP turbine 3HT and on the upstream side of the LP compressor 3LC, where the HP turbine 3HT and the LP compressor 3LC are supplied with the FC exhaust gas, that is, the inlet pressure of the LP compressor 3LC, is high, supplying the FC exhaust gas may become difficult and the power generation efficiency and thus the efficiency of the whole apparatus may decrease. Thus, in the present embodiment, when the pressure of the destination of supply of the FC exhaust gas is equal to or higher than a predetermined pressure, the supply of air and fuel to the fuel cell 4 is discontinued to stop power generation performed by the fuel cell 4. This enables suppression of a decrease in power generation efficiency and in the efficiency of the whole apparatus. Furthermore, since the fuel supply is stopped, inefficient fuel consumption can be suppressed. The pressure of the destination of supply of the FC exhaust gas is detected by the pressure sensor 33.

More specifically, when an exhaust pressure P detected by the pressure sensor 33 is equal to or higher than a predetermined pressure, the ECU 100 controls the air supply control valve 26 and the exhaust control valve 28 so that the valves 26 and 28 are fully closed and stops the FC fuel pump 15 to discontinue power generation performed by the fuel cell 4. In this regard, the installation position of the pressure sensor 33 may be any position on the downstream side of the HP turbine 3HT and on the upstream side of the LP turbine 3LT. However, the installation position is preferably a position on the downstream side of the junction position on the HP turbine bypass passage 14 and on the upstream side of the branch position on the LP turbine bypass passage 11, more preferably, a junction position B on the exhaust path 27 as in the illustrated example. A speed region where the exhaust pressure P is equal to or higher than the predetermined pressure is normally a high speed region where the HP turbine bypass valve 19 is open. This occurs relatively infrequently, and thus, when power generation is stopped if a generation request is made, no problem occurs in a practical sense.

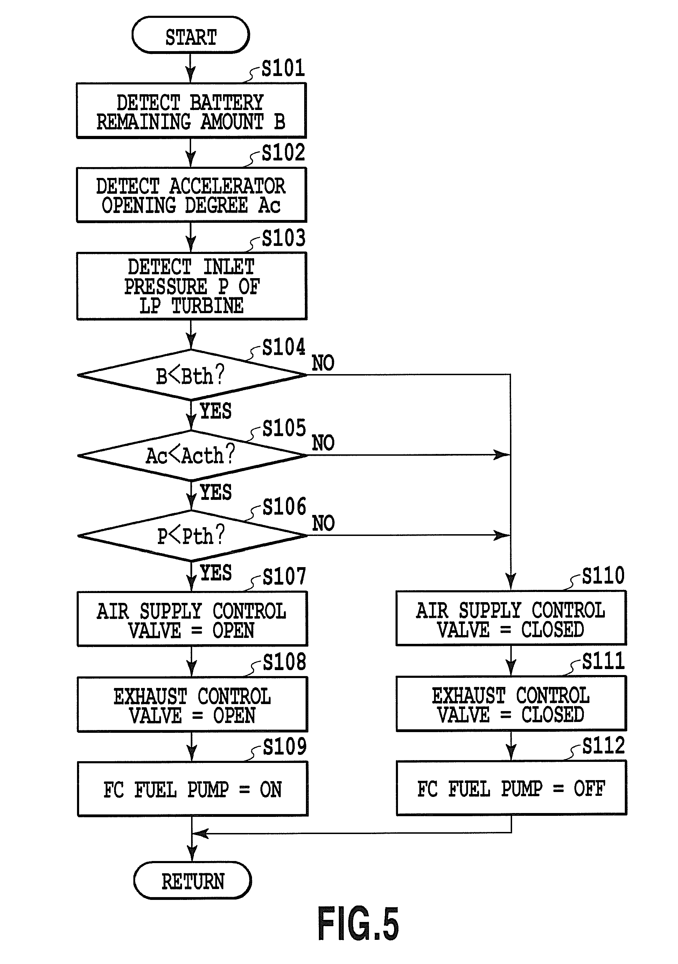

Now, the power generation control according to the present embodiment will be specifically described with reference to Fig. 5. Fig. 5 depicts a flowchart illustrating a routine for the power generation control executed by the ECU 100. The routine is repeatedly executed at every calculation period by the ECU 100.

In step S101, a battery remaining amount B is detected. The battery remaining amount B may be detected any method including a well-known method. In the present embodiment, a battery voltage Vb is simply used as an index value for the battery remaining amount and detected by the ECU 100. The battery remaining amount is 0(%) when the battery voltage Vb is equal to the minimum lower limit voltage Vbx at which the stator motor 48 can perform cranking. The battery remaining amount is 100 (%) when the battery voltage Vb is equal to a predetermined voltage equivalent to the voltage of a fully charged new battery.

In step S102, an accelerator opening degree Ac is detected by the accelerator opening degree sensor 32. In step S103, the exhaust pressure of the destination of supply of the FC exhaust gas, that is, the inlet pressure P of the LP turbine, is detected by the pressure sensor 33.

In step S104, the detected battery remaining amount B is compared with a predetermined threshold Bth, the threshold Bth is the value of a relatively small battery remaining amount at which the fuel cell 4 is suitably allowed to initiate power generation to start charging the battery 17. The threshold Bth is, for example, 30(%). As described below in detail, basically, when the battery remaining amount B is smaller than the threshold Bth, the fuel cell 4 is started to perform power generation to charge the battery 17. When the battery remaining amount B is equal to or larger than the threshold Bth, the fuel cell 4 and power generation performed by the fuel cell 4 are stopped to discontinue the charging.

For determination of whether to perform or stop power generation, the power consumption of the battery 17 or the amount of discharge from the battery 17 may be taken into account in addition to the battery remaining amount B. This is because, with a larger amount of discharge from the battery 17, the battery voltage Vb reaches the lower limit voltage Vbx earlier. In this case, the ECU 100 variably sets the threshold Bth so that the threshold Bth increases consistently with the amount of discharge from the battery 17. This allows power generation to be started earlier as the amount of discharge increases, thus allowing a decrease in battery remaining amount to be suppressed. The amount of discharge from the battery 17 can be detected by, for example, a battery current sensor additionally installed on the battery 17.

When the battery remaining amount B is smaller than the threshold Bth, the process proceeds to step S105. When the battery remaining amount B is equal to or larger than the threshold Bth, the air supply control valve 26 is closed (particularly fully closed) in step S110, the exhaust control valve 28 is closed (particularly fully closed) in step S111, and the fuel pump 15 is turned off in step S112. Thus, the supply of air and fuel to the fuel cell 4 is discontinued to stop the fuel cell 4 and power generation performed by the fuel cell 4. In step S105, the detected accelerator opening degree Ac is compared with a predetermined opening degree Acth. The predetermined opening degree Acth is a value that is suitable for allowing determination of whether or not an acceleration request has been generated, as described above. When the accelerator opening degree Ac is lower than the predetermined opening degree Acth, the ECU 100 determines that no acceleration request has been made to proceed to step S106. When the accelerator opening degree As is equal to or higher than the predetermined opening degree Acth, the ECU 100 determines that an acceleration request has been made to stop power generation in steps S110 to S112. Thus, even if the battery remaining amount B is smaller than the threshold Bth and the battery 17 needs to be charged, power generation is forcibly stopped and the supply of air to the engine main body 2 is given top priority when an acceleration request is made.

In step S106, the detected inlet pressure P of the LP turbine is compared with a predetermined pressure Pth. The predetermined pressure Pth is a value that is suitable for indicating that the pressure of the destination of supply of the FC exhaust gas is high enough to make the supply of the FC exhaust gas difficult. When the inlet pressure P of the LP turbine is lower than the predetermined pressure Pth, the ECU 100 determines that the pressure of the destination of supply of the FC exhaust gas is not high, to proceed to step S107. When the inlet pressure P of the LP turbine is equal to or higher than the predetermined pressure Pth, the ECU 100 determines that the pressure of the destination of supply of the FC exhaust gas is high, to stop power generation in steps S110 to S112. Thus, even if the battery remaining amount B is smaller than the threshold Bth and the battery 17 needs to be charged, power generation is forcibly stopped to avoid inefficient power generation.

In step S107, the air supply control valve 26 is opened. In step S108, the exhaust control valve 28 is opened. In step S109, the FC fuel pump 15 is turned on. Thus, the supply of air and fuel to the fuel cell 4 is performed to activate the fuel cell 4, which thus performs power generation. The opening of the air supply control valve 26 and the exhaust control valve 28 as used herein includes both the above-described intermediate opening degree and the fully open state.

In this example of the power generation control, both of the following operations are preformed: the execution and stoppage of power generation depending on whether an acceleration request has been made (step S105) and the execution and stoppage of power generation depending on the pressure of the destination of supply of the FC exhaust gas (step S106). However, an embodiment is possible in which these operations are not performed or in which only one of these operations is performed.

The embodiment of the present invention has been described in detail. However, various other embodiments are possible. For example, the application, form, and the like of the internal combustion engine are optional. The internal combustion engine may be used for applications other than automobiles.

The present embodiment includes any variations, applications, and equivalents embraced in the concepts of the present embodiment defined by the claims. Thus, the present embodiment should not be interpreted in a limited manner but is applicable to any other technique belonging to the scope of the concepts of the present invention.

## Claims

1. An internal combustion engine comprising a fuel cell, a low-pressure-stage turbocharger with a low-pressure-stage turbine and a low-pressure-stage compressor, and a high-pressure-stage turbocharger with a high-pressure-stage turbine and a high-pressure-stage compressor,
wherein the internal combustion engine is configured such that air to be supplied to the fuel cell is extracted from a downstream side of the low-pressure-stage compressor, and exhaust gas discharged by the fuel cell is supplied to a position on a downstream side of the high-pressure-stage turbine and on an upstream side of the low-pressure-stage turbine.

2. The internal combustion engine according to claim 1, which is configured to extract the air to be supplied to the fuel cell from a position on the downstream side of the low-pressure-stage compressor and on an upstream side of the high-pressure-stage compressor.

3. The internal combustion engine according to claim 1 or claim 2, comprising a first passage branching from an intake passage located on the downstream side of the low-pressure-stage compressor and connecting to the fuel cell in order to allow extraction of the air to be supplied to the fuel cell, and a second passage extending from the fuel cell and joining an exhaust passage located on the downstream side of the high-pressure-stage turbine and the upstream side of the low-pressure-stage turbine in order to allow supply of exhaust gas discharged by the fuel cell.

4. The internal combustion engine according to claim 3, comprising a first control valve provided in the first passage and a second control valve provided in the second passage.

5. The internal combustion engine according to any one of claims 1 to 4, comprising power generation control means for controlling execution and stoppage of power generation by the fuel cell.

6. The internal combustion engine according to claim 5, wherein the power generation control means stops power generation performed by the fuel cell when an acceleration request is made to the internal combustion engine.

7. The internal combustion engine according to claim 4 or claim 5, wherein the power generation control means stops power generation performed by the fuel cell when a pressure of a destination of supply of the exhaust gas from the fuel cell is equal to or higher than a predetermined pressure.
